# DEMANDE DE BREVET EUROPEEN

(11) **EP 1 413 380 A1**
(43) Date de publication de la demande: **28.04.2004**
(21) Numéro de dépôt: 02079453.3
(22) Date de dépôt: 25.10.2002
(51) Int. Cl.: B23K 7/00, B23Q 7/00, B23Q 7/05

(54) **Procédé d'oxycoupage pour brames et installation pour la mise en oeuvre du procédé**

(71) Demandeur: European Steel Mill Services, 75008 Paris (FR)
(72) Inventeur: Goffette, Julien, 88000 Deyvillers (FR)
(74) Mandataire: Waxweiler, Jean

(57) **Abrégé**

L'invention concerne un procédé d'oxycoupage d'une brame parallélipipède (13) dans un poste de coupage, à l'aide d'au moins un chalumeau d'oxycoupage (16), et comprend les étapes: placer la brame horizontalement, transférer la brame dans le poste, basculer la brame autour d'un axe horizontal (2) dans une position inclinée par rapport à la verticale, ajuster la brame par rapport à la position du chalumeau de coupage, mettre le chalumeau d'oxycoupage en marche et le passer sur une surface majeure de la brame en direction dudit axe d'un bord de la brame au bord opposé pour la couper, le coupage terminé, ramener la brame en position horizontale, et transférer la brame hors du poste.

L'invention concerne aussi l'installation pour la mise en oeuvre du procédé.

## Description

L'invention concerne un procédé d'oxycoupage d'une brame parallélipipède dans un poste de coupage, à l'aide d'au moins un chalumeau d'oxycoupage et une installation pour la mise en oeuvre du procédé.

Divers procédés d'oxycoupage sont connus dans l'art, comme par exemple celui décrit dans la demande de brevet française numéro de publication 2 746 686. Dans ce procédé la brame est placée sur chant sur une série de rouleaux entraînés pour laisser défiler la brame devant un chalumeau d'oxycoupage entre des paires de rouleaux verticaux montés fous.

Dans la demande de brevet européen numéro de publication 1177850, un procédé d'oxycoupage de brames et un dispositif pour sa mise en oeuvre sont décrits. Les brames sont refendues ou débitées en position horizontale ou sur chant, suspendus par des électro-aimants au-dessous de rouleaux d'entraînement.

Ces procédés et systèmes connus présentent certains inconvénients qui sont entre autres des investissements énormes ou ils exigent des quantités de production énormes.

Le but de l'invention est de fournir un procédé d'oxycoupage d'une brame et une installation pour sa mise en oeuvre qui n'exigent pas d'investissements énormes et conviennent pour des quantités de production moins grandes, tout en permettant un travail soigné et économique à une vitesse adaptée à la quantité de production moindre.

Selon l'invention ce but est réalisé par un procédé d'oxycoupage d'une brame parallélipipède dans un poste de coupage à l'aide d'au moins un chalumeau d'oxycoupage, comprenant les étapes:
a) placer la brame horizontalement en vue de son introduction dans le poste;
b) transférer la brame dans le poste;
c) basculer la brame autour d'un axe horizontal dans une position inclinée par rapport à la verticale;
d) ajuster la brame par rapport à la position du chalumeau de coupage;
e) mettre le chalumeau d'oxycoupage en marche et le passer sur une surface majeure de la brame en direction dudit axe d'un bord de la brame au bord opposé pour la couper;
f) le coupage terminé, ramener la brame en position horizontale; et
g) transférer la brame hors du poste.

Le procédé selon l'invention peut comprendre l'étape qu'on passe parallèlement au et en même temps que le chalumeau de coupage un système d'ébavurage opposé au chalumeau d'oxycoupage le long de la surface majeure opposée de la brame.

Le but de l'invention est réalisé par une installation d'oxycoupage d'une brame parallélipipède à l'aide d'au moins un chalumeau d'oxycoupage comprenant une table de travail destinée à recevoir sur elle la brame à couper, ladite table pouvant basculer autour d'un axe horizontal d'une position horizontale dans une position inclinée par rapport à la verticale, des rouleaux pouvant tourner sur eux-mêmes montés sur ladite table parallèlement audit axe et de part et d'autre de celui-ci pour recevoir la brame à couper en position horizontale de ladite table, au moins un bras moteur à une extrémité de la table et ledit axe horizontal pour basculer ladite table autour dudit axe dans une position inclinée par rapport à la verticale, un arrêt d'un côté dudit axe pour arrêter en position la brame chargée sur la table pour la couper; un rail de support et de guidage s'étendant à une certaine distance et de bout en bout de ladite table parallèlement audit axe et mobile avec ladite table pour recevoir ledit chalumeau d'oxycoupage, et un moyen moteur pour déplacer le chariot d'oxycoupage le long dudit rail lors du coupage de la brame.

L'installation selon l'invention peut prévoir que ledit arrêt est mobile dans une direction perpendiculaire audit axe.

Aussi l'installation selon l'invention peut comprendre un second bras moteur à l'extrémité opposé de ladite table pour basculer ladite table de la position horizontale de réception de la brame dans la position inclinée.

L'installation selon l'invention peut comprendre plusieurs rouleaux parallèles montés fous parallèlement audit axe d'un côté de ladite table dans le même plan que les rouleaux de ladite table dans sa position horizontale pour recevoir la brame à couper et un moyen de déplacement pour déplacer la brame à couper desdits rouleaux à côté de ladite table sur les rouleaux de la table jusqu'à ce que le bord antérieur de la brame touche ledit arrêt.

L'installation selon l'invention peut en outre comprendre un second rail de support et de guidage parallèle audit rail de support et de guidage et montée en opposition à celui-ci sous les rouleaux de ladite table et un dispositif d'ébavurage se déplaçant sur ledit second rail de support et de guidage en unisson avec le chalumeau d'oxycoupage.

Dans l'installation selon l'invention on peut prévoir un support de l'axe terminal à chaque extrémité dudit axe, le bras moteur à l'extrémité étant monté entre le support terminal de l'axe respectif et un tenon fixé à la table espacé de l'axe.

Finalement l'installation selon l'invention peut comprendre au moins un support intermédiaire de l'axe équidistant des supports terminaux.

L'invention sera maintenant décrite à titre d'exemple non limitatif avec référence aux dessins annexés dans lesquels:

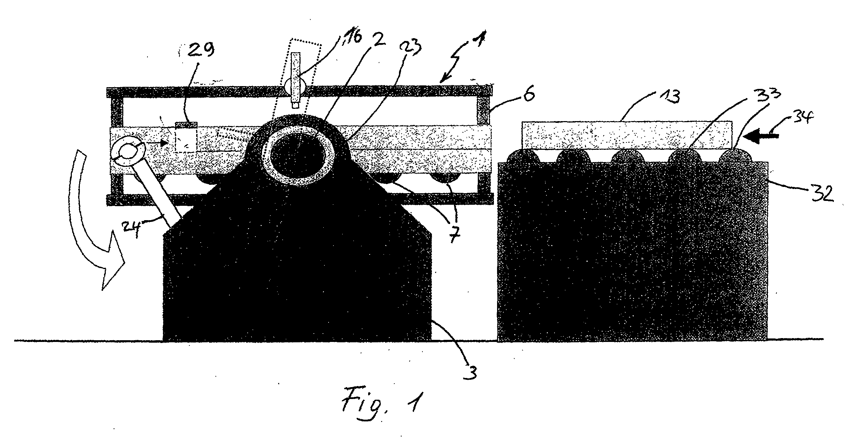

la figure 1 est une représentation schématique de l'installation selon l'invention vue de côté;

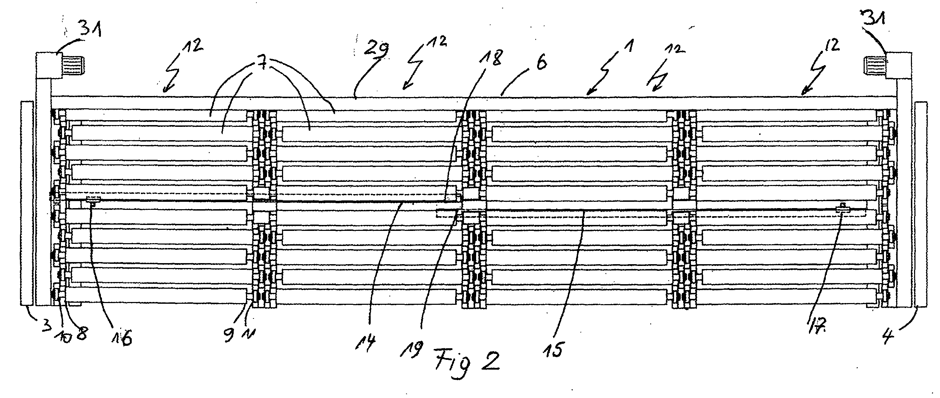

la figure 2 est une projection horizontale simplifiée de la table de l'installation selon l'invention;

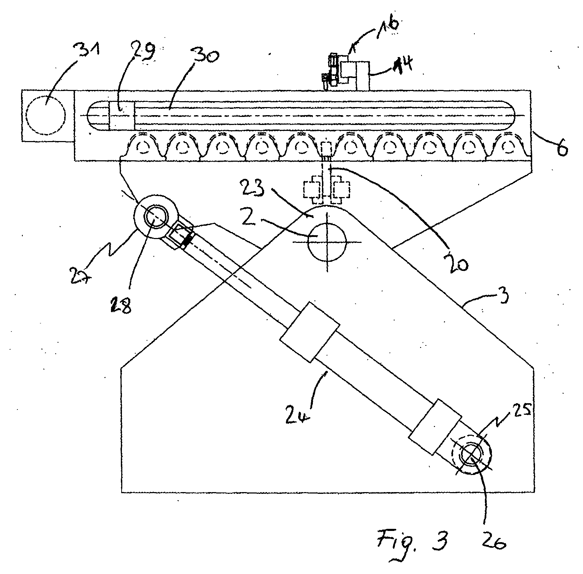

la figure 3 et une vue latérale de l'installation montrant un support terminal de l'axe de support, et la table en position horizontale;
la figure 4 est une vue similaire à la figure 3, la table étant en position inclinée par rapport à la verticale; et

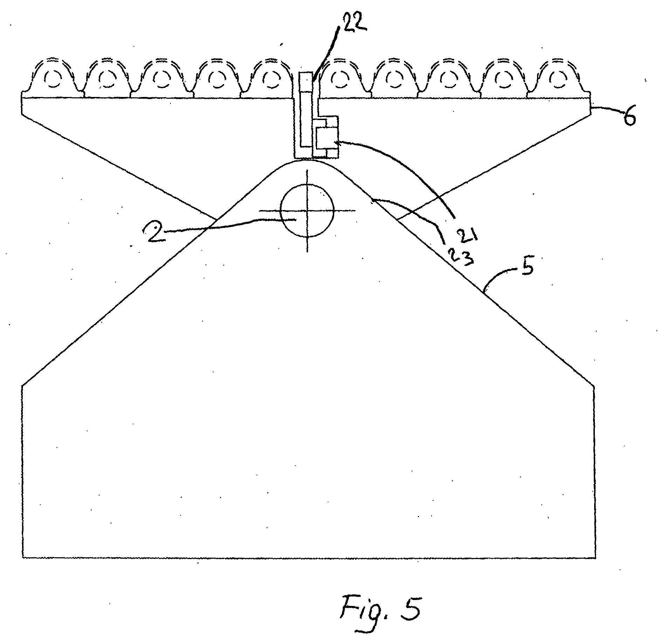

la figure 5 est une vue latérale d'un support intermédiaire de l'installation.

L'installation d'oxycoupage d'une brame selon l'invention est représentée de façon schématique de face, en projection horizontale et dans différentes positions de service. L'installation comprend une table basculante 1 pouvant basculer autour d'un axe horizontale 2 reposant sur deux supports terminaux 3 et 4 opposés et, selon les besoins, sur un support intermédiaire 5. La table 1 comprend un cadre 6, p.ex. rectangulaire, de construction appropriée sur lequel sont montés dans un même plan des rouleaux 7 transporteurs pouvant tourner chacun avec ses extrémités 8 et 9 dans des paliers 10 et 11 appropriés fixées sur la table 1 suivant un modèle de plusieurs champs 12 adjacents de rouleaux parallèles les uns aux autres et parallèles à l'axe 2 de la table 1. Les rouleaux 7 sont montés fous et permettent ainsi le chargement d'une brame 13 horizontale sur le tableau 1.

Au milieu de la table 1 sont montés deux rails de guidage 14 et 15 au-dessus des rouleaux 7 et entre ceux-ci pour recevoir chacun un chalumeau d'oxycoupage 16 et 17 dont la flamme en service passe entre les deux rouleaux 7 pour couper la brame reposant sur les rouleaux 7 de la table 1. Des rails de guidage 14, 15 s'étendent chacun sur une autre moitié de la table 1 le long de l'axe 2 de la table 1. Les extrémités intérieures 18, 19 des deux rails de guidage 14, 15 se recouvrent sur une certaine distance, pour que le mouvement de coupe des deux chalumeaux d'oxycoupage 16, 17 permette de couper la brame sur toute sa longueur. A cet endroit de chevauchement des rails de guidage 14, 15 la flamme de chaque chalumeau d'oxycoupage 16, 17 passe entre les rails de guidage de sorte que sur la longueur de chevauchement chaque chalumeau d'oxycoupage 14, 15 peut à lui seul couper la brame 13. Ceci garantit que la brame 13 est coupée sur toute sa longueur. Le chemin de déplacement des flammes sur la brame 13 est une ligne droite partant d'une extrémité de la brame 13 vers l'extrémité opposée de la brame 13 entre les supports terminaux 3 opposés.

De la même façon on trouve sous les rouleaux 7 deux rails de guidage 20 et 21 qui s'étendent chacun sur une moitié de la table 1 le long de l'axe 2 entre les rouleaux 7 pour recevoir chacun un dispositif d'ébavurage 22. Les extrémités intérieures des rails 20, 21 se recouvrent sur une certaine distance pour que le mouvement des deux dispositifs d'ébavurages 22 puisse suivre sans interruption le mouvement des chalumeaux d'oxycoupage 14, 15 faisant une coupe ininterrompue de la brame 13. Le mouvement d'un chalumeau d'oxycoupage 14 ou 15 et du dispositif d'ébavurage opposé 22 sont synchronisés. Les chalumeaux d'oxycoupage 14, 15 se déplacent des extrémités opposées de la brame 13 vers l'endroit de chevauchement de leurs mouvements au milieu de la brame 13.

L'axe 2 solidaire de la table 1 est logé dans des paliers 23 appropriés fixés aux supports terminaux 3, 4 et au(x) support(s) intermédiaire(s) 5, respectivement permettant le basculement de la table 1.

Pour ce basculement un moyen d'entraînement est prévu à chaque extrémité de la table 1 près des supports terminaux 3, 4. Chaque moyen d'entraînement est composé d'un vérin 24 pneumatique ou hydraulique articulé à une extrémité 25 à un axe 26 solidaire du support terminal 3 ou 4, et à l'autre extrémité 27 à un axe 28 solidaire de la table 1 à une distance appropriée de l'axe 2 sur l'extrémité de la table 1 faisant face au support terminal 3 ou 4. Le vérin 24 hydraulique ou pneumatique s'étendant entre l'axe 26 sur le support terminal 3 ou 4 et l'axe 28 sur la table 1, par sa contraction ou son extension, fait basculer la table 1 autour de l'axe 2. Les deux vérins à l'extrémité respective de la table 1 fonctionnent simultanément afin de déplacer celles-ci en synchronisme et éviter que la table 1 se torde pendant la rotation ou le basculement de la table 1.

Sur la table 1 une butée mobile 29 est prévue pour s'étendre sur toute la longueur de la table 1 au-dessus des rouleaux 7. Ses extrémités respectives sont pourvues d'un écrou perpendiculaire à l'axe longitudinal de la butée dans lequel tourne une tige filetée 30 adaptée à l'écrou. Quand la tige filetée 30, qui est fixe par rapport à la table 1, tourne l'écrou monte et descend le long de la tige filetée et déplace la butée 29 le long de la table 1 parallèlement aux rouleaux 7. Chaque tige filetée 30 est entraînée par un moteur 31. Les mouvements des tiges filetées, sont synchronisés pour empêcher que la butée se déplace en biais par rapport à la table 1 et non parallèlement à son axe 2. La butée 29 sert à fixer la distance de déplacement du bord antérieur de la brame 13 sur la table 1 de la ligne de coupe et définit la largeur du morceau de brame découpé.

Pour le dépôt de la brame à couper et après coupe on prévoit une table 32 avec des rouleaux 33 montés fous à côté de la table 1 dont les rouleaux 7 se trouvent en position de travail horizontale dans le même plan que les rouleaux 33.

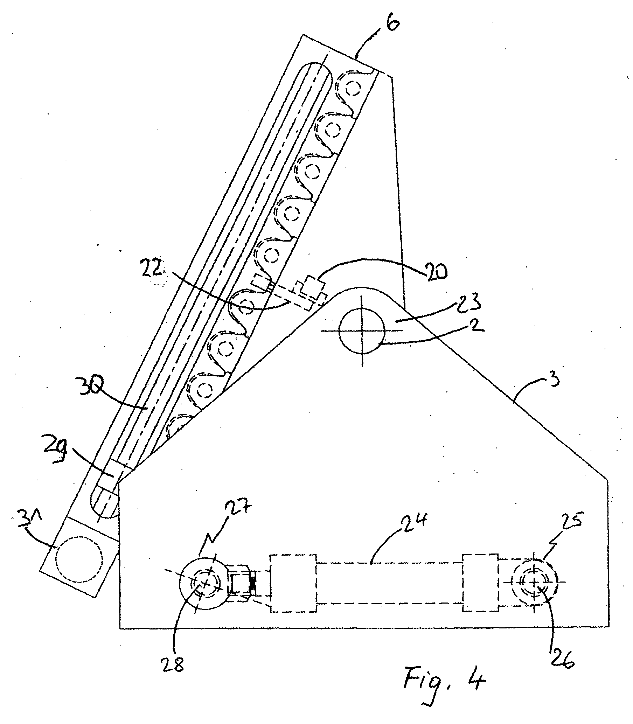

Une brame 13 à couper est déposée sur les rouleaux 33 de la table 32 pour être déplacée dans le sens de la flèche 34 des rouleaux 33 sur les rouleaux 7 de la table 1 dans sa position horizontale jusque son bord antérieur touche la butée 29, qui a été ajustée préalablement à une distance de la ligne de coupe égale à la largeur de brame désirée. La table est basculée à l'àide des moyens d'entraînement 24 dans la position de travail montrée à la figure 4. Les chalumeaux d'oxycoupage 16, 17 sont mis en marche et découpent la brame 13 en se déplaçant vers le milieu de la brame 13 sur les rails de guidage 14, 15. Quand la brame est coupée, la table 1 est remise dans sa position horizontale et ensuite la brame est retournée sur la table 32 pour être enlevée. Pendant la découpe les dispositifs d'ébavurage 22 se déplacent simultanément avec le chalumeau d'oxycoupage 16 ou 17 associé pour ébavurer la ligne de coupe.

## Revendications

1. Procédé d'oxycoupage d'une brame parallélipipède dans un poste de coupage, à l'aide d'au moins un chalumeau d'oxycoupage, **caractérisé par** les étapes:
a) placer la brame horizontalement en vue de son introduction dans le poste;
b) transférer la brame dans le poste;
c) basculer la brame autour d'un axe horizontal dans une position inclinée par rapport à la verticale;
d) ajuster la brame par rapport à la position du chalumeau de coupage;
e) mettre le chalumeau d'oxycoupage en marche et le passer sur une surface majeure de la brame en direction dudit axe d'un bord de la brame au bord opposé pour la couper;
f) le coupage terminé, ramener la brame en position horizontale; et
g) transférer la brame hors du poste.

2. Procédé selon la revendication 1, **caractérisé en ce qu'**on passe parallèlement au et en même temps que le chalumeau de coupage un système d'ébavurage opposé au chalumeau d'oxycoupage le long de la surface majeure opposée de la brame.

3. Installation d'oxycoupage d'une brame parallélipipède à l'aide d'au moins un chalumeau d'oxycoupage, caractérisé pour une table de travail destinée à recevoir sur elle la brame à couper, ladite table pouvant basculer autour d'un axe horizontal d'une position horizontale dans une position inclinée par rapport à la verticale, des rouleaux pouvant tourner sur eux-mêmes montés sur ladite table parallèlement audit axe et de part et d'autre de celui-ci pour recevoir la brame à couper en position horizontale de ladite table, au moins un bras moteur à une extrémité de la table et ledit axe horizontal pour basculer ladite table autour dudit axe dans une position inclinée par rapport à la verticale, un arrêt d'un côté dudit axe pour arrêter en position la brame chargée sur la table pour la couper; un rail de support et de guidage s'étendant à une certaine distance et de bout en bout de ladite table parallèlement audit axe et mobile avec ladite table pour recevoir ledit chalumeau d'oxycoupage, et un moyen moteur pour déplacer le chariot d'oxycoupage le long dudit rail lors du coupage de la brame.

4. Installation selon la revendication 3, **caractérisé en ce que** ledit arrêt est mobile dans une direction perpendiculaire audit axe.

5. Installation selon la revendication 3 ou 4, **caractérisée par** un second bras moteur à l'extrémité opposé de ladite table pour basculer ladite table de la position horizontale de réception de la brame dans la position inclinée.

6. Installation selon une quelconque des revendications 3 à 5, **caractérisée par** plusieurs rouleaux parallèles montés à fous parallèlement audit axe d'un côté de ladite table dans le même plan que les rouleaux de ladite table dans sa position horizontale pour recevoir la brame à couper et un moyen de déplacement pour déplacer la brame à couper desdits rouleaux à côté de ladite table sur les rouleaux de la table jusqu'à ce que le bord antérieur de la brame touche ledit arrêt.

7. Installation selon une quelconque des revendications 3 à 6, **caractérisée par** un second rail de support et de guidage parallèle audit rail de support et de guidage et montée en opposition à celui-ci sous les rouleaux de ladite table et un dispositif d'ébavurage se déplaçant sur ledit second rail de support et de guidage en unisson avec le chalumeau d'oxycoupage.

8. Installation selon une quelconque des revendications 3 à 7, **caractérisée par** un support de l'axe terminal à chaque extrémité dudit axe, le bras moteur à l'extrémité étant monté entre le support terminal de l'axe respectif et un tenon fixé à la table espacé de l'axe.

9. Installation selon la revendication 9, **caractérisé par** au moins un support intermédiaire de l'axe équidistant des supports terminaux.
